# EUROPEAN PATENT APPLICATION

(11) **EP 3 513 989 A1**
(43) Date of publication of application: **24.07.2019**
(21) Application number: 17850597.0
(22) Date of filing: 09.08.2017
(51) Int. Cl.: B60C 5/01

(54) **TIRE**

(30) Priority: 14.09.2016 JP 2016179833
(71) Applicant: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2017/028973
(87) International publication number: WO 2018/051691

(57) **Abstract**

A tire, including: a tire frame member formed of a resin material; and a reinforcing layer that includes a plurality of reinforcing cords coated with a rubber material and that is disposed on an outer side of the tire frame member in a tire radial direction; in which the tire frame member has a region formed of a resin material having a Young's modulus in a range of from 50 MPa to 2,000 MPa, and the region being included in at least a part of a reinforcing region in which the reinforcing layer is disposed on an outer side in the tire radial direction.

## Description

### Technical Field

The present invention relates to a tire in which a tire frame member is formed of a resin material.

### Background Art

From the viewpoint of weight reduction and ease of recycling, it has been proposed to use, as a tire material, a thermoplastic resin, a thermoplastic elastomer or the like. As such a tire, for example, a cast tire in which a pair of semicircular members separated from each other based on a tire equatorial plane is bonded to and integrated with each other to constitute a tire main body and a thermoplastic elastomer is used for the semicircular members constituting the tire main body is disclosed (for example, see Japanese Patent Application Laid-Open (JP-A) No. S59-011901). In JP-ANo. S59-011901, a crown portion is provided with a concave groove, and a tread band in which a belt layer that has cords arranged at a certain angle with respect to a circumferential direction is embedded is mounted on the concave groove.

### SUMMARY OF INVENTION

### Technical Problem

In the tire disclosed in JP-A No. S59-011901, a rubber such as a diene-based rubber is used for the tread band in which the belt layer provided with the cords is embedded. Here, examples of an aspect in which a reinforcing layer having reinforcing cords is disposed on an outer side of a tire frame member in a tire radial direction may include an aspect in which the cord is coated with a resin, in addition to an aspect in which the cords are coated with a rubber material as disclosed in JP-ANo. S59-011901. However, in the case of applying reinforcing cords coated with a resin, it is common to perform heat treatment at the time of causing the reinforcing cords to adhere to a tire frame member. On the other hand, in the case of applying reinforcing cords coated with a rubber material, it is not generally required to perform heat treatment at the time of causing the reinforcing cords to adhere to a tire frame member, and it is possible to suppress the number of times of heating that is applied to the tire frame member formed of a resin material, as compared with the case of applying the reinforcing cords coated with the resin. Then, it is possible to suppress a change in characteristics due to a thermal history of the tire frame member.

However, when the reinforcing layer that has the reinforcing cords coated with the rubber material is disposed on the outer side of the tire frame member in the tire radial direction, elasticity of the rubber material generally used for the coating is much smaller than that of the resin used for the aspect in which the reinforcing cords are coated with the resin, shearing rigidity in a plane of the reinforcing layer may be decreased. Then, a force (that is, cornering force) applied onto a vehicle body when a vehicle changes a traveling direction or turns may be decreased. Therefore, a tire that has an excellent cornering force even in the aspect in which the reinforcing cords coated with the rubber material are disposed on the outer side of the tire frame member formed of the resin material in the tire radial direction has been demanded.

In consideration of the above matters, the present disclosure is to provide a tire which includes a tire frame member formed of a resin material and a reinforcing layer that has reinforcing cords coated with a rubber material, and which has excellent cornering force.

### Solution to Problem

### The present disclosure includes the following aspects.

<1> A tire, including: a tire frame member formed of a resin material; and a reinforcing layer that includes a plurality of reinforcing cords coated with a rubber material and that is disposed on an outer side of the tire frame member in a tire radial direction; in which the tire frame member has a region formed of a resin material having a Young's modulus in a range of from 50 MPa to 2,000 MPa, and the region being included in at least a part of a reinforcing region in which the reinforcing layer is disposed on an outer side in the tire radial direction.

### Advantageous Effects of Invention

According to the present disclosure, there is provided a tire which includes a tire frame member formed of a resin material and a reinforcing layer that has reinforcing cords coated with a rubber material, and which has an excellent cornering force.

### BRIEF DESCRIPTION OF DRAWINGS

Fig. 1 is a cross-sectional view of a configuration of a tire according to a first embodiment, taken along a tire width direction.
Fig. 2 is a cross-sectional view of a configuration of a tire according to a second embodiment, taken along a tire width direction.

### DESCRIPTION OF EMBODIMENTS

In the present specification, a numerical range indicated using "to" means a range that includes numerical values described before and after "to" as the minimum value and the maximum value, respectively.

In the present specification, in the case in which a plurality of substances corresponding to each component are present in a composition, an amount of each component in the composition means a total amount of the plurality of substances present in the compositions, unless specifically stated.

### (Tire)

The tire according to the present disclosure includes a tire frame member formed of a resin material, and a reinforcing layer that has a plurality of reinforcing cords coated with a rubber material and that is disposed on an outer side of the tire frame member in a tire radial direction. The tire frame member has a region having a Young's modulus in a range of from 50 MPa to 2,000 MPa (hereinafter, also simply referred to as "specific resin material region"), and the region being included in at least a part of a reinforcing region in which the reinforcing layer is disposed on an outer side in the tire radial direction.

When a vehicle changes a traveling direction or turns, a so-called cornering force is required. However, when a reinforcing layer that has reinforcing cords coated with a rubber material is disposed on an outer side of a tire frame member in a tire radial direction, shearing rigidity in a plane of the reinforcing layer is decreased, as a result of which the cornering force may be decreased.

On the other hand, according to the tire of the present disclosure, since the tire frame member has a specific resin material region formed of a resin material having the Young's modulus in a specific range, and the region being included in at least a part of the reinforcing region, the cornering force can be improved.

### [Tire Frame Member]

The tire of the present disclosure has a tire frame member formed of a resin material. The tire frame member is a member which is a main body of a resinous tire. The tire frame member may have, for example, an annular shape. In addition, the tire frame member may be configured to include, for example, a pair of bead portions, a pair of side portions extending from the bead portions toward the outer side in the tire radial direction, and a crown portion connecting an outer side end of one side portion in the tire radial direction and an outer side end of the other side portion in the tire radial direction.

### . Young's modulus

The tire frame member has the specific resin material region that is included in at least a part of the reinforcing region in which the reinforcing layer is disposed on the outer side in the tire radial direction. The Young's modulus of the resin material constituting this specific resin material region is in the range of from 50 MPa to 2,000 MPa.

If the Young's modulus falls below a lower limit of the above range, rigidity of the reinforcing region of the tire frame member is not increased, and it becomes difficult to improve cornering force. On the other hand, if the Young's modulus exceeds an upper limit of the above range, rigidity of the tire frame member is increased, longitudinal spring is increased, and a riding comfort deteriorates.

The Young's modulus of the resin material constituting the specific resin material region is preferably in a range of from 100 MPa to 500 MPa and more preferably in a range of from 200 MPa to 400 MPa, from the viewpoint that both the cornering force and the riding comfort can be achieved at a high level. The Young's modulus of the resin material constituting the specific resin material region is more preferably in a range of from 220 MPa to 280 MPa, and still more preferably in a range of from 240 MPa to 260 MPa.

In addition, in the tire of the present disclosure, it is preferable that the Young's modulus of the resin material of the specific resin material region included in at least a part of the reinforcing region of the tire frame member is higher than a Young's modulus of a resin material in the region (for example, the side portion) other than the reinforcing region. Accordingly, regarding the configuration of the tire frame member, it is preferable that the region in which the outer side in the tire radial direction is reinforced with the reinforcing layer has a higher Young's modulus and the other regions have a lower Young's modulus. By doing so, it is possible to increase the cornering force by supplementing the decrease in the shearing rigidity in the plane of the reinforcing layer with the specific resin material region having a high Young's modulus. On the other hand, it is possible to retain elasticity and the like originally required for a tire by setting the low Young's modulus for the region other than the region reinforced with the reinforcing layer.

The Young's modulus of the resin material constituting the specific resin material region of the tire frame member is measured according to a method of measuring tensile elastic modulus specified in JIS K7161 (1994).

### . Specific Resin Material Region

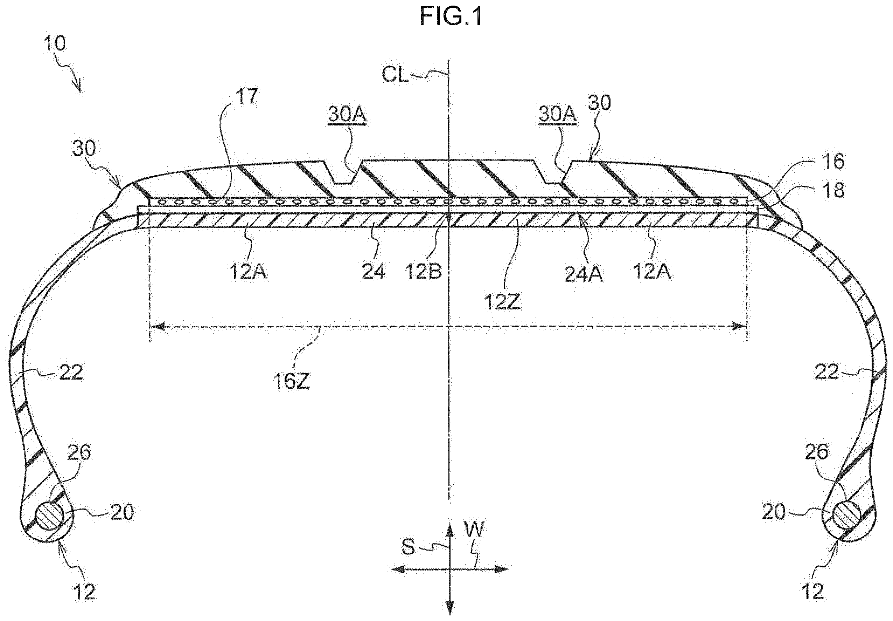

Here, a description will be made with reference to the drawings. Fig. 1 is a cross-sectional view of a configuration of a tire according to a first embodiment, which is an example of the present invention, taken along a tire width direction.

An arrow W in the drawings indicates a direction (referred to as "tire width direction" in the present specification) parallel to a tire rotation axis, and an arrow S indicates a direction (referred to as "tire radial direction" in the present direction) passing through the tire rotation axis and orthogonal to the tire width direction. In addition, the "radial direction" is a direction orthogonal to a tire circumferential direction. In addition, an alternate long and short dash line CL indicates a center line of the tire.

As shown in Fig. 1, the tire 10 according to the first embodiment includes a tire frame member 12 formed of a resin material, a spiral belt layer (an example of a reinforcing layer) 16, an adhesive layer 18, and a tread rubber 30. In addition, the spiral belt layer 16 is provided with a plurality of reinforcing cords 17 coated with a rubber material.

The tire frame member 12 has a pair of bead portions 20, a pair of side portions 22 extending from the pair of bead portions 20, respectively, toward an outer side in a tire radial direction, and a crown portion 24 extending from the side portions 22 toward an inner side in a tire width direction. A part from an inner end in the tire radial direction of the tire frame member 12 to 30% of a section height is referred to as the bead portions 20, a portion where the tread rubber 30 is disposed is referred to as the crown portion 24, and a portion connecting the bead portions 20 and the crown portion 24 is referred to as the side portions 22.

In addition, in the tire frame member 12, the region in which the reinforcing layer (the spiral belt layer in the present embodiment) 16 is disposed on the outer side in the tire radial direction is referred to as a reinforcing region 16Z.

A specific resin material region formed of a resin material having a Young's modulus in the above range is provided at least in the reinforcing region of the tire frame member. It is to be noted that the specific resin material region may exist only within the reinforcing region, or may exist to protrude from the reinforcing region toward the outer side (that is, a side portion direction of the tire frame member) in the tire width direction.

The specific resin material region may exist while being divided into a plurality of regions in the tire width direction or the tire circumferential direction of the tire frame member, but it is preferable that the specific resin material region is integrally formed. When the specific resin material region is integrally formed, it is preferable that the specific resin material region exists over the whole area in the tire circumferential direction, and when the specific resin material region is divided into a plurality of regions, it is preferable that the specific resin material region is dispersed over the whole area in the tire circumferential direction.

When the specific resin material region is integrally formed, it is preferable that the specific resin material region is formed so that a width thereof (that is, a length in the tire width direction) may be substantially the same over the whole area in the tire circumferential direction. When the specific resin material region is divided into a plurality of regions in the tire circumferential direction, it is preferable that the plurality of specific resin material region is formed so that all widths (that is, lengths in the tire width direction) of the plurality of specific resin material regions is substantially the same over the whole area in the tire circumferential direction.

In the first embodiment shown in Fig. 1, the tire frame member 12 has a specific resin material region 12Z formed of a resin material having a Young's modulus in the above-described range and the region being included in the reinforcing region 16Z in which the spiral belt layer 16 is disposed on the outer side in the tire radial direction.

The specific resin material region 12Z further protrudes from the reinforcing region 16Z toward the outer side (that is, toward the side portion 22) in the tire width direction. In addition, the specific resin material region 12Z exists over the whole area in the tire circumferential direction while being integrally formed toward the tire width direction or the tire circumferential direction of the tire frame member. In addition, the specific resin material region 12Z is formed so that a width thereof (that is, a length in the tire width direction) is substantially the same over the whole area in the tire circumferential direction.

Even in any of the state in which the specific resin material region is integrally formed and the state in which the specific resin material region is divided into a plurality of regions in the tire circumferential direction, a width (that is, a length in the tire width direction) of the specific resin material region is preferably in a range of from 0.5 to 1.3 times a length of the reinforcing region in the tire width direction (that is, a length of the reinforcing layer in the tire width direction). The width (that is, the length in the tire width direction) of the specific resin material region is preferably in a range of from 0.8 to 1.3 times, more preferably in a range of from 0.9 to 1.2 times, and still more preferably in a range of from 1.0 to 1.1 times, the length of the reinforcing region in the tire width direction (that is, the length of the reinforcing layer in the tire width direction).

When the width of the specific resin material region to the length of the reinforcing region in the tire width direction is equal to or larger than a lower limit of the above range, the rigidity of the reinforcing region of the tire frame member can be increased and the cornering force can be further improved. On the other hand, when the width of the specific resin material region to the length of the reinforcing region in the tire width direction is equal to or smaller than an upper limit of the above range, the rigidity of the tire frame member does not become too high, longitudinal spring is suppressed from being increased, and a riding comfort is improved.

It is possible to achieve both the cornering force and the riding comfort at a high level by setting the width of the specific resin material region within the above range.

The width (that is, the length in the tire width direction) of the specific resin material region is preferably in a range of from 0.5 to 1.0 times, more preferably in a range of from 0.6 to 0.9 times, and still more preferably in a range of from 0.7 to 0.8 times, a length of the tire in the width direction.

When the width of the specific resin material region is not substantially the same over the whole area in the tire circumferential direction, it is preferable that a length of at least one of the longest part or the shortest part of the length of the specific resin material region in the tire width direction is in the above range with respect to the length of the reinforcing region in the tire width direction. In addition, it is more preferable that the lengths of both the longest part and the shortest part are in the above ranges with respect to the length of the reinforcing region in the tire width direction.

Here, the reinforcing layer is generally disposed over the entire area in the tire circumferential direction so that a center of the reinforcing layer overlaps with a center line (that is, a tire equatorial plane) of the tire. Therefore, a position where the specific resin material region is provided in the tire frame member is also preferably formed so that the center in the tire width direction overlaps with the center line (that is, the tire equatorial plane) of the tire.

### . Region Other Than Specific Resin Material Region

In a region (hereinafter, also simply referred to as "the other region") other than the specific resin material region of the tire frame member, the resin material constituting the other region is not particularly limited and can be freely selected from known resin materials and used. However, a Young's modulus of the resin material constituting the other regions is preferably lower than the Young's modulus of the resin material constituting the specific resin material region.

The Young's modulus of the resin material constituting the other regions is preferably in a range of from 1 MPa to 30 MPa, more preferably in a range of from 3 MPa to 20 MPa, still more preferably in a range of from 5 MPa to 15 MPa, from the viewpoint of rim assembling property and the like. The Young's modulus of the resin material constituting the other regions is measured according to a method of measuring tensile elastic modulus specified in JIS K7161 (1994).

### . Thickness

In the tire frame member, a ratio of an average thickness of the reinforcing region in which the reinforcing layer is disposed on the outer side in the tire radial direction to a thickness of a minimum thickness portion of the side portion is preferably in a range of from 1 to 10 times.

When the ratio is equal to or larger than a lower limit of the above range, the rigidity of the reinforcing region of the tire frame member can be increased and the cornering force can be further improved. On the other hand, when the ratio is equal to or smaller than an upper limit of the above range, the rigidity of the tire frame member does not become too high and the riding comfort becomes improved. Further, an amount of resin to be used can be decreased, and an increase in weight and an increase in cost can be suppressed. In addition, a decrease in air retention in the tire is suppressed.

It is possible to achieve both the cornering force and the riding comfort at a high level by setting the ratio within the above range.

In addition, the average thickness of the reinforcing region of the tire frame member is preferably in a range of from 0.5 mm to 6.0 mm.

When the average thickness is equal to or larger than a lower limit of the above range, the rigidity of the reinforcing region of the tire frame member can be increased and the cornering force can be further improved. On the other hand, when the average thickness is equal to or smaller than an upper limit of the above range, the rigidity of the tire frame member does not become too high and the riding comfort is improved. Further, the amount of resin to be used can be decreased, and the increase in weight and the increase in cost can be suppressed.

The average thickness is more preferably in a range of from 1.0 mm to 4.0 mm and more preferably in a range of from 1.2 mm to 2.0 mm, from the viewpoint of realizing the improvement in the riding comfort and the decrease in the resin amount at a higher level.

Here, the average thickness of the reinforcing region of the tire frame member is obtained by measuring a thickness of the reinforcing region at 100 spots (that is, 10 points in a tire width direction × 10 points in a tire circumferential direction) in total using, as a measurement device, a thickness gauge manufactured by Mitutoyo Corporation and calculating the average of the measured thickness.

In addition, a thickness of the minimum thickness portion of the side portion is measured using the above device as the measurement device. It is to be noted that the minimum thickness portion indicates a portion having the thinnest thickness at the side portion.

Next, the resin material constituting the specific resin material region and the other region (that is, the region other than the specific resin material region) of the tire frame member will be described.

### -Resin Material-

The resin material constituting the tire frame member may contain at least a resin as a main raw material and may further contain an additive. The resin does not contain a vulcanized rubber. The tire frame member contains a resin preferably in an amount of 50 mass% or more, more preferably in an amount of 70 mass% or more, and particularly preferably in an amount of 90 mass% or more, with respect to the total mass. Examples of the resin contained in the resin material include not only a thermoplastic resin (including a thermoplastic elastomer), a thermosetting resin, and other general-purpose resins, but also engineering plastics (including super engineering plastics), and the like. The tire frame member formed of such a resin material is also referred to as a resinous tire frame body in the present specification. In addition, the resin material may have a different configuration for each region, as a result of which the resin material may have different Young's modulus for each region.

The thermoplastic resin (including the thermoplastic elastomer) is referred to as a polymer compound which becomes softened and flows as a temperature rises, and becomes in relatively rigid and high strength state when cooled. In the present specification, among these materials, a polymer compound which becomes softened and flows as the temperature rises, and becomes in relatively rigid and high strength state when cooled, and which has rubbery elasticity is referred to as the thermoplastic elastomer. In addition, the thermosetting resin is referred to as a polymer compound which forms a three-dimensional network structure and hardens as a temperature rises. Examples of the thermosetting resin include, for example, a phenol resin, an epoxy resin, a melamine resin, and a urea resin.

As the thermoplastic resin (including the thermoplastic elastomer), a thermoplastic resin having elasticity equivalent to that of a rubber used for a general tire, a thermoplastic elastomer (TPE) or the like can be used. Considering the elasticity at the time of traveling and moldability at the time of manufacturing, it is preferable to use the thermoplastic elastomer.

Examples of the thermoplastic elastomer include a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), and a dynamic crosslinking type thermoplastic elastomer (TPV).

### (Polyamide-Based Thermoplastic Elastomer (TPA))

The "polyamide-based thermoplastic elastomer" means a thermoplastic elastomer formed of a copolymer which includes a polymer constituting a hard segment that is crystalline and has a high melting point, and a polymer constituting a soft segment that is non-crystalline and has a low glass transition temperature, and which has an amide bond (that is, -CONH-) in a main chain of the polymer constituting the hard segment.

In addition, the portion of the thermoplastic elastomer that connects the hard segment and the soft segment is referred to as a connection portion.

Examples of the polyamide-based thermoplastic elastomer include a material in which at least a polyamide constitutes a hard segment that is crystalline and has a high melting point, and other polymer (for example, polyester or polyether) constitutes a soft segment that is non-crystalline and has a low glass transition temperature.

### . Hard Segment

Examples of the polyamide forming the hard segment may include, for example, a polyamide which is synthesized using monomers represented by the following General Formula (1) or General Formula (2).

General Formula (1) H₂N-R¹-COOH

In General Formula (1), R¹ represents an aliphatic hydrocarbon (preferably a saturated aliphatic hydrocarbon) molecular chain having from 2 to 20 carbon atoms, examples of which include an alkylene group having from 2 to 20 carbon atoms.

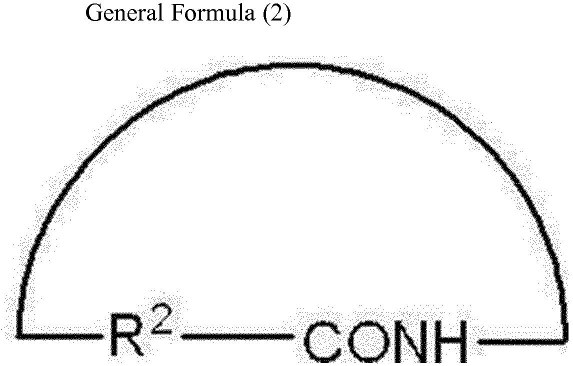

In General Formula (2), R² represents an aliphatic hydrocarbon (preferably a saturated aliphatic hydrocarbon) molecular chain having from 3 to 20 carbon atoms, examples of which include an alkylene group having from 3 to 20 carbon atoms.

In General Formula (1), R¹ is preferably an aliphatic hydrocarbon molecular chain having from 3 to 18 carbon atoms (for example, an alkylene group having from 3 to 18 carbon atoms), more preferably an aliphatic hydrocarbon molecular chain having from 4 to 15 carbon atoms (for example, an alkylene group having from 4 to 15 carbon atoms), and particularly preferably an aliphatic hydrocarbon molecular chain having from 10 to 15 carbon atoms (for example, an alkylene group having from 10 to 15 carbon atoms). In addition, in General Formula (2), R² is preferably an aliphatic hydrocarbon molecular chain having from 3 to 18 carbon atoms (for example, an alkylene group having from 3 to 18 carbon atoms), more preferably an aliphatic hydrocarbon molecular chain having from 4 to 15 carbon atoms (for example, an alkylene group having from 4 to 15 carbon atoms), and particularly preferably an aliphatic hydrocarbon molecular chain having from 10 to 15 carbon atoms (for example, an alkylene group having from 10 to 15 carbon atoms).

Examples of the monomer represented by General Formula (1) or General formula (2) include ω-aminocarboxylic acid and lactam. In addition, examples of the polyamide forming the hard segment include a polycondensate of ω-aminocarboxylic acid, a polycondensate of lactam, and a co-condensation polymer of diamine and dicarboxylic acid.

Examples of the ω-aminocarboxylic acid include aliphatic ω-aminocarboxylic acids having from 5 to 20 carbon atoms such as 6-aminocaproic acid, 7-aminoheptanoic acid, 8-aminooctanoic acid, 10-aminocapric acid, 11-aminoundecanoic acid, and 12-aminododecanoic acid. In addition, examples of the lactam include aliphatic lactams having from 5 to 20 carbon atoms such as lauryllactam, ε-caprolactam, undecane lactam, ω-enantholactam, and 2-pyrrolidone.

Examples of the diamine include diamine compounds such as an aliphatic diamine having from 2 to 20 carbon atoms such as ethylene diamine, trimethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylene diamine, 2,4,4-trimethylhexamethylene diamine, and 3-methylpentamethylene diamine. In addition, the dicarboxylic acid can be represented by HOOC-(R³)ₘ-COOH(R³: a hydrocarbon molecular chain having from 3 to 20 carbon atoms, m: 0 or 1), and examples thereof include aliphatic dicarboxylic acids having from 2 to 22 carbon atoms such as oxalic acid, succinic acid, glutaric acid, adipic acid, pimelic acid, suberic acid, azelaic acid, sebacic acid, and dodecanedioic acid.

Examples of the polyamide forming the hard segment include a polyamide (polyamide 6) obtained by ring-opening polycondensation of ε-caprolactam, a polyamide (polyamide 11) obtained by ring-opening polycondensation of undecane lactam, a polyamide (polyimide 12) obtained by ring-opening polycondensation of lauryllactam, a polyamide (polyamide 12) obtained by polycondensation of 12-aminododecanoic acid, and a polyamide (polyamide 66) obtained by polycondensation of a diamine and a dibasic acid.

The polyamide 6 can be represented by, for example, {CO-(CH₂)₅-NH}ₙ(n represents an arbitrary number of repeating units), and for example, n is preferably from 2 to 100 and more preferably from 3 to 50.

The polyamide 11 can be represented by, for example, {CO-(CH₂)₁₀-NH}ₙ(n represents an arbitrary number of repeating units), and for example, n is preferably from 2 to 100 and more preferably from 3 to 50.

The polyamide 12 can be represented by, for example, {CO-(CH₂)₁₁-NH}ₙ (n represents an arbitrary number of repeating units), and for example, n is preferably from 2 to 100 and more preferably from 3 to 50.

The polyamide 66 can be represented by, for example, {CO(CH₂)₄CONH(CH₂)₆NH}ₙ (n represents an arbitrary number of repeating units), and for example, n is preferably from 2 to 100 and more preferably from 3 to 50.

The polyamide-based thermoplastic elastomer preferably has the polyamide (polyamide 12) having a unit structure represented by -[CO-(CH₂)₁₁-NH]- as the hard segment, and preferably also has the polyamide (polyamide 6) having a unit structure represented by -[CO-(CH₂)₅-NH]-. As described above, the polyamide 12 can be obtained by the ring-opening polycondensation of lauryllactam or the polycondensation of 12-aminododecanoic acid.

A number average molecular weight of the polymer (polyamide) forming the hard segment is preferably from 300 to 15,000, from the viewpoint of melt moldability.

### . Soft Segment

Examples of the polymer (that is, the polymer compound forming the soft segment) forming the soft segment include polyester and polyether, and further, examples thereof include polyethylene glycol, polypropylene glycol, polytetramethylene ether glycol (PTMG), and ABA type triblock polyether, and these can be used singly or in combination of two or more kinds thereof.

In addition, the polymer forming the soft segment may be a polymer having a functional group that is introduced into a terminal thereof. The functional group may be a functional group which reacts with a terminal group of a compound (for example, the polymer forming the hard segment or a chain extender) which causes a reaction with the polymer forming the soft segment. For example, when the terminal group of the compound which causes a reaction with the polymer forming the soft segment is a carboxy group, examples of the functional group include an amino group. In addition, for example, when the terminal group of the compound which causes a reaction with the polymer forming the soft segment is an amino group, examples of the functional group include a carboxy group.

Among the polymers forming the soft segment, examples of a polymer having an amino group that is introduced into a terminal thereof include a polyetherdiamine which is obtained by reacting ammonia or the like with a terminal of polyether, and specific examples thereof include ABA type triblock polyetherdiamine. In addition, among the polymers forming the soft segment, examples of a polymer having a carboxy group that is introduced into a terminal thereof include a polyether dicarboxylic acid which is obtained by an oxidization reaction of a hydroxyl group of a terminal of polyether into a carboxy group, and specific examples thereof include ABA type triblock polyether dicarboxylic acid.

Here, examples of the "ABA type triblock polyether" can include a polyether represented by the following General Formula (3)

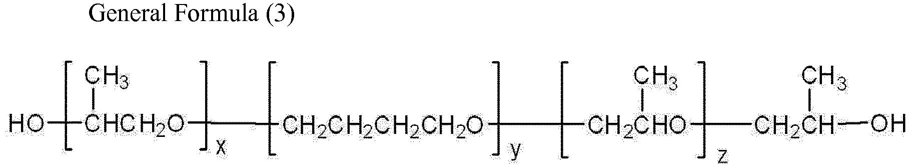

In General Formula (3), x and z each independently represent an integer from 1 to 20. y represents an integer from 4 to 50.

In General Formula (3), x and z each are preferably an integer from 1 to 18, more preferably an integer from 1 to 16, particularly preferably an integer from 1 to 14, and most preferably an integer from 1 to 12. In addition, in General Formula (3), y is preferably an integer from 5 to 45, more preferably an integer from 6 to 40, particularly preferably an integer from 7 to 35, and most preferably an integer from 8 to 30.

In addition, examples of the "ABA type triblock polyetherdiamine" can include a polyetherdiamine which is represented by the following General Formula (N).

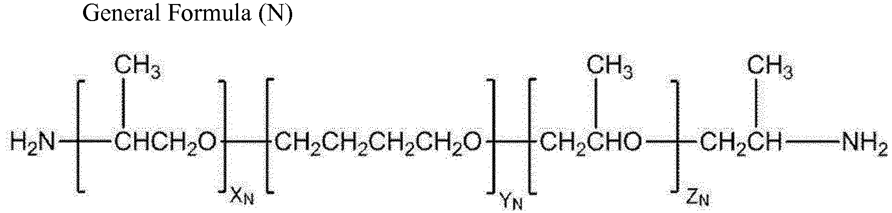

In General Formula (N), X_{N} and Z_{N} each independently represent an integer from 1 to 20. Y_{N} represents an integer from 4 to 50.

In General Formula (N), X_{N} and Z_{N} each are preferably an integer from 1 to 18, more preferably an integer from 1 to 16, particularly preferably an integer from 1 to 14, and most preferably an integer from 1 to 12. In addition, in General Formula (N), Y_{N} is preferably an integer from 5 to 45, more preferably an integer from 6 to 40, particularly preferably an integer from 7 to 35, and most preferably an integer from 8 to 30.

The polymer forming the soft segment may contain, as a monomer unit, diamines such as a branched saturated diamine having from 6 to 22 carbon atoms, a branched alicyclic diamine having from 6 to 16 carbon atoms, or norbornane diamine. In addition, the branched saturated diamine having from 6 to 22 carbon atoms, the branched alicyclic diamine having from 6 to 16 carbon atoms, and the norbornane diamine each may be used singly or in combination thereof, and may be used in combination with the ABA type triblock polyether and/or the ABA type triblock polyetherdiamine described above.

Examples of the branched saturated diamine having from 6 to 22 carbon atoms include 2,2,4-trimethyl-1,6-hexanediamine, 2,4,4-trimethyl-1,6-hexanediamine, 1,2-diaminopropane, 1,3-diaminopentane, 2-methyl-1,5-diaminopentane, and 2-methyl-1,8-diaminooctane.

Examples of the branched alicyclic diamine having from 6 to 16 carbon atoms include 5-amino-2,2,4-trimethyl-1-cyclopentane methylamine, and 5-amino-1,3,3-trimethylcyclohexane methylamine. These diamines may be either a cis form or a trans form, or mixtures of these isomers.

Examples of the norbornane diamine include 2,5-norbornanedimethylamine, 2,6-norbornanedimethylamine, and a mixture thereof.

Further, the polymer forming the soft segment may include, as a monomer unit, diamine compounds other than those described above. Examples of other diamine compounds include: aliphatic diamines such as ethylene diamine, trimethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylene diamine, 2,4,4-trimethylhexamethylene diamine, and 3-methylpentanemethylene diamine; alicyclic diamines such as bis (4-aminocyclohexyl) methane, bis (4-aminocyclohexyl) propane, 1,3-bisaminomethylcyclohexane, and 1,4-bisaminomethylcyclohexane; and aromatic diamines such as metaxylylene diamine and paraxylylene diamine.

These diamines may be used singly or in combination of two or more kinds thereof as appropriate.

However, from the viewpoint of light fastness, it is preferable that the polymer forming the soft segment does not contain an aromatic ring.

A weight average molecular weight of the polymer forming the soft segment is preferably from 200 to 6,000, more preferably from 1,000 to 6,000, and particularly preferably from 3,000 to 6,000, from the viewpoints of toughness and low temperature flexibility.

As a combination of the hard segment and the soft segment, a combination of each of the hard segment and the soft segment described above can be used. Among these, a combination of a ring-opening polycondensate of lauryllactam and polyethylene glycol, a combination of a ring-opening polycondensate of lauryllactam and polypropylene glycol, a combination of a ring-opening polycondensate of lauryllactam and polytetramethylene ether glycol, a combination of a ring-opening polycondensate of lauryllactam and ABA type triblock polyether, a combination of a ring-opening polycondensate of lauryllactam and ABA type triblock polyetherdiamine, a combination of an aminododecanoic acid polycondensate and polyethylene glycol, a combination of an aminododecanoic acid polycondensate and polypropylene glycol, a combination of an aminododecanoic acid polycondensate and polytetramethylene ether glycol, a combination of an aminododecanoic acid polycondensate and ABA type triblock polyether, and a combination of an aminododecanoic acid polycondensate and ABA type triblock polyetherdiamine are preferable, and a combination of a ring-opening polycondensate of lauryllactam and ABA type triblock polyether, a combination of a ring-opening polycondensate of lauryllactam and ABA type triblock polyetherdiamine, a combination of an aminododecanoic acid polycondensate and ABA type triblock polyether, and a combination of an aminododecanoic acid polycondensate and ABA type triblock polyetherdiamine are particularly preferable.

### • Connection Portion

Examples of the connection portion of the polyamide-based thermoplastic elastomer include a portion connected with a chain extender including an aromatic ring.

Examples of the chain extender containing an aromatic ring include an aromatic dicarboxylic acid and a derivative thereof, an aromatic diamine, an aromatic diol, and an aromatic diisocyanate.

Specific examples of the aromatic dicarboxylic acid include phthalic acid, isophthalic acid, terephthalic acid, phenylene diacetic acid, naphthalene dicarboxylic acid (2,6-naphthalene dicarboxylic acid, 2,7-naphthalene dicarboxylic acid, 1,4-naphthalene dicarboxylic acid, 2,3-naphthalene dicarboxylic acid, or the like), biphenyl dicarboxylic acid (4,4-biphenyl dicarboxylic acid, 2,2-biphenyl dicarboxylic acid, or the like), anthracene dicarboxylic acid (2,6-anthracene dicarboxylic acid, 2,7-anthracene dicarboxylic acid, or the like), pyrene dicarboxylic acid (4,8-pyrene dicarboxylic acid, 1,6-pyrene dicarboxylic acid, or the like), triphenylene dicarboxylic acid (2,7-triphenylene dicarboxylic acid, 1,7- triphenylene dicarboxylic acid, or the like), and porphyrin dicarboxylic acid (21H, 23H-porphyrin-2,12-dicarboxylic acid, or the like).

Specific examples of the aromatic diamine include o-phenylene diamine, m-phenylene diamine, p-phenylene diamine, m-xylylene diamine, p-xylylene diamine, 1,4-naphthalene diamine, 1,5-naphthalene diamine, 2,6-naphthalene diamine, 2,7-naphthalene diamine, and anthracene-9,10-diacetic acid.

Specific examples of the aromatic diol include o-dihydroxy benzene, m-dihydroxy benzene, p-dihydroxy benzene, 1,4-naphthalene diol, 1,5-naphthalene diol, 2,6-naphthalene diol, 2,7-naphthalene diol, bisphenol A, an ethylene oxide adduct of bisphenol A, a propylene oxide adduct of bisphenol A, and 9,10-dihydroxy methylanthracene.

Specific examples of the aromatic diisocyanate include 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, xylylene diisocyanate, tetramethylxylylene diisocyanate, 2,6-diisopropylphenyl isocyanate, and 1,3,5-triisopropylbenzene-2,4-diisocyanate.

### • Molecular Weight

A weight average molecular weight of the polyamide-based thermoplastic elastomer is preferably, for example, from about 5,000 to about 200,000 and more preferably from 20,000 to 160,000, from the viewpoint of rim assembling property and melt viscosity. The weight average molecular weight of the polyamide-based thermoplastic elastomer can be measured by gel permeation chromatography (GPC), and for example, gel permeation chromatography (GPC) such as "HLC-8320 GPC Eco SEC" manufactured by Tosoh Corporation can be used.

In the polyamide-based thermoplastic elastomer, a mass ratio (HS/SS) of the hard segment (HS) and the soft segment (SS) is preferably from 30/70 to 90/10 from the viewpoint of moldability and the like, and more preferably from 54/46 to 88/12 and particularly preferably from 52/46 to 75/25 from the viewpoint of rim assembling property and low loss property.

A content of the hard segment in the polyamide-based thermoplastic elastomer is preferably from 5 mass% to 95 mass%, more preferably from 10 mass% to 90 mass%, and still more preferably from 15 mass% to 85 mass%, with respect to the total amount of the polyamide-based thermoplastic elastomer.

A content of the soft segment in the polyamide-based thermoplastic elastomer is preferably from 5 mass% to 95 mass%, more preferably from 10 mass% to 90 mass%, and still more preferably from 15 mass% to 85 mass%, with respect to the total amount of the polyamide-based thermoplastic elastomer.

In the case of using the chain extender, a content thereof is preferably set so that the terminal group (for example, hydroxyl group or amino group) of the polymer forming the soft segment and a group in the chain extender (for example, carboxyl group) that is bonded to the terminal group of the soft segment are approximately equimolar.

The polyamide-based thermoplastic elastomer may have a connection portion not containing an aromatic ring, in addition to the connection portion containing an aromatic ring. A ratio (mass ratio) of the connection portion containing an aromatic ring to the entire connection portion of the polyamide-based thermoplastic elastomer is, for example, 1 mass% or more and 100 mass% or less, and is preferably 3 mass% or more and 100 mass% or less.

The polyamide-based thermoplastic elastomer can be synthesized by copolymerizing the polymer forming the hard segment and the polymer forming the soft segment by a known method using a chain extender.

For example, the polyamide-based thermoplastic elastomer can be obtained by polymerizing, in a container, a monomer (for example, ω-aminocarboxylic acids such as 12-aminododecanoic acid or lactams such as lauryllactam) constituting the hard segment and a chain extender (for example, adipic acid or decanedicarboxylic acid) and then adding a polymer (for example, polypropylene glycol, ABA type triblock polyether, or diamine in which the terminals thereof are modified to an amino group) constituting the soft segment, and further polymerizing the mixture.

The resin material contains various additives such as rubber, various kinds of fillers (for example, silica, calcium carbonate, or clay), an anti-aging agent, oil, a plasticizer, a colorant, a weathering agent, or a reinforcing agent as desired. A content of the additive in the resin material (tire frame body) is not particularly limited and can be appropriately used as long as the effect of the present disclosure is not impaired.

### [Reinforcing Layer]

The tire according to the present disclosure includes a reinforcing layer that includes a plurality of reinforcing cords coated with a rubber material and that is disposed on an outer side of the tire frame member in a tire radial direction. The reinforcing layer that includes the plurality of reinforcing cords coated with the rubber material may be a so-called spiral belt layer that is formed by spirally winding the reinforcing cords coated with the rubber material in the tire circumferential direction. In addition, the reinforcing layer that includes the plurality of reinforcing cords coated with the rubber material may be a so-called crossing belt layer that is arranged to be inclined with respect to a tire rotation axis of the tire frame member and that includes the plurality of reinforcing cords coated with the rubber material. In addition, the crossing belt layer has a superposed structure having a plurality of layers, and can be disposed so that the reinforcing cords included in one layer of the plurality of layers and the reinforcing cords included in another layer cross each other between these layers.

### -Rubber Material-

Examples of rubber included in the rubber material include a diene-based rubber and a non-diene-based rubber. The diene-based rubber is not particularly limited, but examples thereof include natural rubber (NR), butadiene rubber (BR), isoprene rubber (IR), styrene-butadiene rubber (SBR), and acrylonitrile-butadiene rubber (NBR). Examples of the non-diene-based rubber include butyl rubber (IIR), and ethylene/propylene rubber (EPM, EPDM). As the rubber material, the non-diene-based rubber is preferable. In addition, it is preferable that the rubber material is vulcanized.

In addition to rubber, various additives which are generally blended for a tire or other rubber compositions, such as carbon black, a vulcanizing agent, a vulcanization promoter, various oils, an anti-aging agent, and a plasticizer can be blended in the rubber material. The rubber material including these additives can be kneaded and vulcanized by a general method.

### -Reinforcing Cord-

As the reinforcing cord, a monofilament (also referred to as a single filament) of a metal fiber, an organic fiber, or the like, a multifilament (also referred to as a stranded filament) in which fibers are stranded, such as an organic fiber or a steel cord composed of steel fibers, can be used. A diameter or a thread number of the reinforcing cord can be appropriately set according to the structure of the reinforcing layer, the type of cord members used, or the type of tires. For the coating of the reinforcing cord with the rubber material, the known method can be appropriately used. For example, the reinforcing layer can be formed by winding a reinforcing cord coated with an unvulcanized rubber material serving as a rubber material around a tire frame member to form an unvulcanized reinforcing layer, and vulcanizing the rubber material that coats the reinforcing cord.

Specifically, a so-called spiral layer can be formed by spirally winding the reinforcing cord coated with an unvulcanized rubber material around the tire frame member along the tire circumferential direction, and then vulcanizing the unvulcanized rubber material. In addition, for example, a so-called crossing belt layer can be formed by disposing a plate-like member (also referred to as a ply), in which reinforcing cords are arranged in an unvulcanized rubber material so as to be inclined with respect to a tire rotation axis of a tire frame member, on an outer peripheral surface of the tire frame member, and then vulcanizing the unvulcanized rubber material. In addition, the crossing belt layer may be formed by disposing two or more layers of the plate-like member in a tire thickness direction so that an inclination angle of the reinforcing cord is different between the layers.

### [Adhesive Layer]

The tire frame member and the reinforcing layer may be fixed by an adhesive layer. The material of the adhesive layer is not particularly limited as long as it can cause the reinforcing layer and the tire frame member to be adhered to each other. For example, the adhesive layer can be formed using an adhesive, and a water dispersion adhesive, a solvent-free adhesive, a solution adhesive, a solid adhesive (for example, a hot melt adhesive), or the like can be used.

### [First Embodiment]

Hereinafter, a first embodiment of the present invention will be described with reference to the drawings. An arrow W in the drawings indicates a direction (hereinafter, sometimes referred to as "tire width direction") parallel to a tire rotation axis, and an arrow S indicates a direction (hereinafter, sometimes referred to as "tire radial direction") passing through the tire rotation axis and orthogonal to the tire width direction. In addition, the "radial direction" is a direction orthogonal to a tire circumferential direction. In addition, an alternating long and short dash line CL indicates a center line of the tire.

Next, a structure of the tire according to the first embodiment will be described. Fig. 1 is a cross-sectional view of a configuration of the tire according to the first embodiment, taken along a tire width direction. As shown in Fig. 1, a tire 10 according to the first embodiment includes a tire frame member 12 formed of a resin material, a spiral belt layer (an example of a reinforcing layer) 16, an adhesive layer 18, and a tread rubber 30. In addition, the spiral belt layer 16 is provided with a plurality of reinforcing cords 17 coated with a rubber material. The tire frame member 12 has a specific resin material region 12Z formed of a resin material having a Young's modulus in the above-described range, and the specific resin material region 12Z being included in a region (that is, a reinforcing region 16Z) in which the spiral belt layer 16 is disposed on an outer side in a tire radial direction.

In addition, in the tire according to the first embodiment, the specific resin material region 12Z further protrudes from the reinforcing region 16Z toward an outer side (that is, toward a side portion 22) in a tire width direction. The specific resin material region 12Z exists over the whole area in a tire circumferential direction while being integrally formed toward the tire width direction or the tire circumferential direction of the tire frame member. In addition, the specific resin material region 12Z is formed so that a width thereof (that is, a length in the tire width direction) may be substantially the same over the whole area in the tire circumferential direction.

### (Tire Frame Member)

The tire frame member 12 is formed of a resin material and has an annular shape by bonding a pair of tire pieces 12A in the tire width direction. It is to be noted that the tire frame member 12 may be formed by bonding three or more tire pieces 12A. A circumferential direction, a width direction, and a radial direction of the tire frame member 12 correspond to the tire circumferential direction, the tire width direction, and the tire radial direction, respectively.

The tire frame member 12 has a pair of bead portions 20, a pair of side portions 22 extending from the pair of bead portions 20, respectively, toward an outer side in a tire radial direction, and a crown portion 24 extending from the side portions 22 toward an inner side in a tire width direction. A part from an inner end of the tire frame member 12 in the tire radial direction to 30% of a section height is referred to as the bead portions 20, a portion where the tread rubber 30 is disposed is referred to as the crown portion 24, and a portion connecting the bead portions 20 and the crown portion 24 is referred to as the side portions 22.

As the resin material constituting the tire frame member 12, as described above, a thermoplastic resin, a thermoplastic elastomer (TPE), a thermosetting resin, or the like, which has elasticity equivalent to that of rubber used for a general tire can be used. Considering the elasticity at the time of traveling and moldability at the time of manufacturing, it is preferable to use the thermoplastic elastomer. It is to be noted that the entirety of the tire frame member 12 may be formed of a resin material or only a part thereof may be formed of a resin material.

In the present embodiment, the reinforcing region 16Z of the tire frame member 12 includes the specific resin material region 12Z formed of a resin material having the Young's modulus in the above-described range, and a region (that is, other region) other than the specific resin material region 12Z also has a region formed of a resin material.

The bead portion 20 partially contacts a rim when the tire 10 is fitted in the rim (not shown). A bead core 26 is embedded in the bead portion 20. The bead core 26 is configured by winding a bead cord in an annular shape plural times or by molding, in an annular shape, a cable cord in which a plurality of bead cords is stranded. As a material constituting the bead core 26, a metal, an organic fiber, an organic fiber coated with a resin, a hard resin or the like can be used. If the rigidity of the bead portion 20 is secured and there is no problem in fitting with the rim, the bead core 26 may be omitted.

The side portions 22 are located on both sides in the tire width direction of the tire frame member 12 and are continuous on the outer side of the pair of bead portions 20 in the tire radial direction. The side portion 22 is smoothly curved so as to protrude outwardly in the tire axis direction from the bead portion 20 toward the crown portion 24.

The crown portion 24 is a portion connecting an outer end of one side portion 22 in the tire radial direction and an outer end of the other side portion 22 in the tire radial direction, and supports the tread rubber 30 disposed on the outer side in the tire radial direction. In the present embodiment, the crown portion 24 has a substantially constant thickness, and the outer surface (that is, an outer peripheral surface 24A in Fig. 1) in the tire radial direction is formed in a flat shape along the tire width direction. That is, in the outer peripheral surface 24A of the crown portion 24, a distance to a tire axial line is substantially constant from one end to the other end in the tire width direction. The outer peripheral surface 24A of the crown portion 24 of the present embodiment is a portion where the adhesive layer 18 and the spiral belt layer 16 described below are disposed.

In the present embodiment, the outer peripheral surface 24A of the crown portion 24 is formed in the flat shape along the tire width direction, but the present invention is not limited to this configuration, and the outer peripheral surface 24A may not be formed in the flat shape along the tire width direction. For example, the outer peripheral surface 24A of the crown portion 24 may be formed in a curved shape (also referred to as an arc-shaped cross section) in which the outer peripheral surface 24A of the crown portion 24 is inflated toward the outer side in the tire radial direction.

The tire frame member 12 is formed by fusing the pair of tire pieces 12A to each other at a central part 12B of the crown portion 24 in the tire width direction. It is to be noted that the tire frame member 12 may be formed by bonding the tire pieces 12A to each other, with a resinous bonding member interposed in the vicinity of the central part of the crown portion 24 in the tire width direction. As the bonding member, a thermoplastic material or a molten resin of the same kind as or different kind from that of the tire piece 12A can be used.

### (Adhesive Layer)

The adhesive layer 18 is disposed on the outer side of the crown portion 24 in the tire radial direction so as to make a round in the tire circumferential direction. The adhesive layer 18 is a layer for causing the tire frame member 12 and the spiral belt layer 16 to be bonded to each other, and the outer peripheral surface 24A (that is, the outer surface in the tire radial direction) of the crown portion 24 and the inner surface in the tire radial direction of the spiral belt layer 16 are bonded on both surfaces of the adhesive layer 18.

Means for forming the adhesive layer 18 on the surface of the crown portion 24 is not particularly limited, and the known method can be appropriately applied. For example, the adhesive forming the adhesive layer 18 may be applied onto the crown portion 24 by the coating or the like, and then heated to form the adhesive layer 18, or the adhesive layer 18 may be formed by sticking, to the crown portion 24 along the tire circumferential direction, a belt-like adhesive layer 18 formed in advance.

### (Reinforcing Layer)

The spiral belt layer 16 is disposed, via the adhesive layer 18, on the outer side of the crown portion 24 in the tire radial direction so as to make a round in the tire circumferential direction. The spiral belt layer 16 is provided with a plurality of reinforcing cords 17. The reinforcing cord 17 is coated with a rubber material and is formed by being spirally wound in the tire circumferential direction. In other words, the spiral belt layer 16 is formed by spirally winding the spiral belt layer 16, which is formed by coating the reinforcing cord 17 with a rubber material, in the tire circumferential direction. The rubber material coating the reinforcing cord 17 has a substantially rectangular appearance. In addition, in the spiral belt layer 16, the reinforcing cords 17 coated with the rubber material are arranged in parallel in the tire width direction.

A thickness of the spiral belt layer 16 is not particularly limited, but is preferably, for example, from 0.8 mm to 2.5 mm. When the thickness of the spiral belt layer 16 is in the above range, there is also an effect of weight reduction by optimizing a rubber volume, and fuel consumption performance can be improved.

### (Tread Rubber)

As shown in Fig. 1, the tread rubber 30 as a tread layer is disposed on the outer side of the crown portion 24 and the spiral belt layer 16 in the tire radial direction. It is to be noted that the tread rubber 30 is superposed on the tire frame member 12 and is then vulcanization adhered.

The tread rubber 30 is formed of a rubber having better wear resistance than the resin material forming the tire frame member 12, and the same kind of tread rubber as a tread rubber used in conventional rubber pneumatic tires can be used.

In addition, a drainage groove 30A extending in the tire circumferential direction is provided on a tread surface of the tread rubber 30. In the present embodiment, two grooves 30A are provided, but the number of grooves is not limited thereto, and more grooves 30A may be provided. In addition, as the tread pattern, the known tread pattern can be used.

In order to manufacture the tire 10 in the present embodiment, for example, first, the tire piece 12A is obtained by integrally molding a portion which is the specific resin material region 12Z of the tire piece 12A and a portion which is regions (that is, other regions) other than the specific resin material region 12Z. Thereafter, a pair of tire pieces 12A is bonded to each other in the tire width direction, thereby forming an annular tire frame member 12.

In addition, after the portion which is the specific resin material region 12Z of the tire piece 12A and the portion which is the region (that is, other regions) other than the specific resin material region 12Z are separately molded, the portions may be bonded to each other to obtain the tire piece 12A. Thereafter, the pair of tire pieces 12A is bonded to each other in the tire width direction, thereby forming the annular tire frame member 12.

It is to be noted that the portion which is the specific resin material region 12Z of the tire piece 12A and the portion which is the region (that is, other regions) other than the specific resin material region 12Z may be bonded to each other by interposing, for example, a resinous bonding member therebetween. As the bonding member, a thermoplastic material or a molten resin of the same kind as or different kind from the tire piece 12A can be used.

Next, an adhesive is applied onto the crown portion 24 of the tire frame member 12 to form a coating film, and the reinforcing cord 17 coated with the unvulcanized rubber material is spirally wound on the coating film in the tire circumferential direction to form the unvulcanized spiral belt layer 16. Further, the unvulcanized tread rubber 30 is disposed on the unvulcanized spiral belt layer 16, and then subjected to vulcanization treatment by heating, by which it is possible to obtain the tire 10 according to the present embodiment in which the spiral belt layer 16 including the reinforcing cord 17 coated with the rubber material and the tread rubber 30 are provided on the tire frame member 12 in this order. The method of manufacturing the tire 10 according to the present embodiment is not limited to this method.

### (Action)

The action of the tire 10 according to the first embodiment will be described. In the tire 10 according to the first embodiment, since the tire frame member 12 has the specific resin material region 12Z formed of the resin material having the Young's modulus in a specific range, and the region being included in the reinforcing region 16Z, the rigidity of the reinforcing region 16Z can be increased and the cornering force can be improved.

In the tire 10, since the spiral belt layer 16 is formed by spirally winding the reinforcing cord 17 coated with a rubber in the tire circumferential direction, the tire circumferential rigidity of the outer peripheral surface 24A is improved. In addition, the radial growth of the crown portion 24 at the time of tire rolling (that is, the phenomenon that the crown portion 24 inflates in the tire radial direction) is suppressed due to the hoop effect of the spiral belt layer 16 formed by the reinforcing cord 17 coated with a rubber.

### [Second Embodiment]

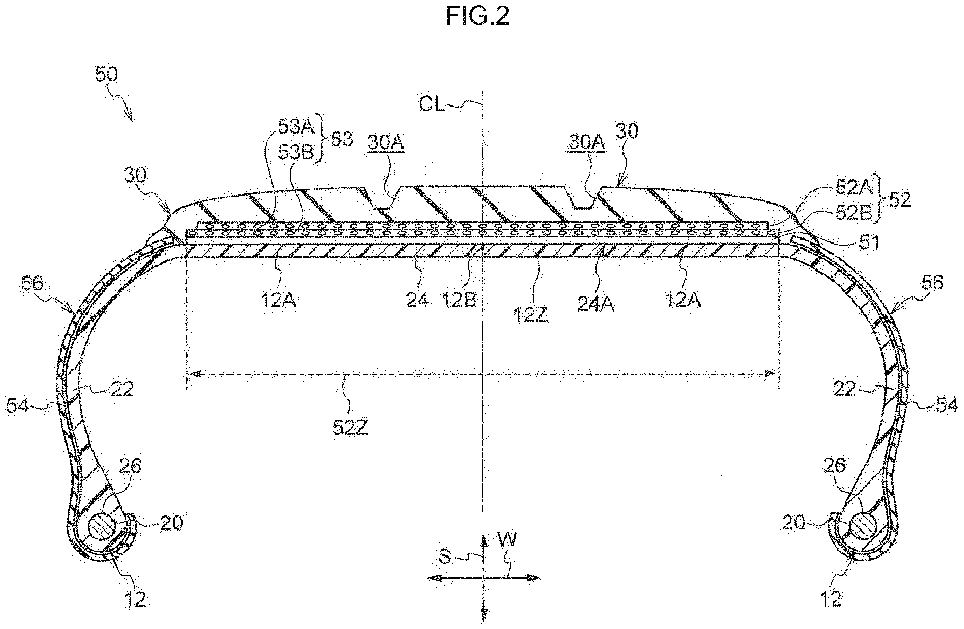

Next, a structure of the tire according to the second embodiment will be described. Fig. 2 is a cross-sectional view of a configuration of the tire according to the second embodiment, taken along a tire width direction. In Fig. 2, the same reference numerals are given to members common to those shown in the other drawings, and the description thereof is omitted. As shown in Fig. 2, a tire 50 according to the second embodiment includes a tire frame member 12 formed of a resin material, an adhesive layer 51, a crossing belt layer 52, a reinforcing member 54, and a tread rubber 30. The tire frame member 12 has a specific resin material region 12Z formed of a resin material having a Young's modulus in the above-described range, and the region being included in a region (that is, a reinforcing region 52Z) in which the crossing belt layer 52 is disposed on an outer side in a tire radial direction.

According to the second embodiment, the specific resin material region 12Z further protrudes from a reinforcing region 52Z toward the outer side (that is, toward the side portion 22) in the tire width direction. In addition, the specific resin material region 12Z exists over the whole area in the tire circumferential direction while being integrally formed toward the tire width direction or the tire circumferential direction of the tire frame member 12. In addition, the specific resin material region 12Z is formed so that a width thereof (that is, the length in the tire width direction) may be substantially the same over the whole area in the tire circumferential direction.

### (Adhesive Layer)

The adhesive layer 51 is disposed on the outer side of the crown portion 24 in the tire radial direction so as to make a round in the tire circumferential direction. The adhesive layer 51 is a layer for causing the tire frame member 12 and the crossing belt layer 52 to be bonded to each other, and an outer peripheral surface 24A (that is, the outer surface in the tire radial direction) of the crown portion 24 and the inner surface of the crossing belt layer 52 in the tire radial direction are bonded on both surfaces of the adhesive layer 51.

Means for forming the adhesive layer 51 on the surface of the crown portion 24 is not particularly limited, and the known method can be appropriately applied. For example, the adhesive forming the adhesive layer 51 may be applied onto the crown portion 24 by the coating or the like to form the adhesive layer 51, or the adhesive layer 51 may be formed by sticking a belt-like adhesive layer 51 to the crown portion 24 along the tire circumferential direction.

### (Crossing Belt Layer)

The crossing belt layer 52 is disposed, via the adhesive layer 51, on the outer peripheral surface 24A of the crown portion 24 to make a round in the tire circumferential direction. In addition, the crossing belt layer 52 has a superposed structure in which a second crossing belt layer 52B and a first crossing belt layer 52A are superposed in order toward the outer side in the tire radial direction. In the present embodiment, the adhesive layer 51 and an inner surface of the second crossing belt layer 52B in the tire radial direction are adhered to each other. In addition, in the present embodiment, an outer surface of the first crossing belt layer 52A in the tire radial direction and the tread rubber 30 are vulcanization adhered.

The first crossing belt layer 52A and the second crossing belt layer 52B each include a plurality of reinforcing cords 53 (that is, a first reinforcing cord 53A and a second reinforcing cord 53B in Fig. 2). The reinforcing cords 53 are coated with a rubber material and arranged so as to be inclined with respect to the tire rotation axis. In addition, the plurality of reinforcing cords 17 is arranged at regular intervals along the tire circumferential direction.

The crossing belt layer 52 has a superposed structure including a first crossing belt layer 52A and a second crossing belt layer 52B. The first crossing belt layer 52A and the second crossing belt layer 52B each have a plurality of first reinforcing cords 53A or second reinforcing cords 53B. For example, the first crossing belt layer 52A may be configured by arranging a belt-like member, in which the reinforcing cord 53A coated with a rubber material is embedded, so as to make a round in the tire circumferential direction, or may be configured by disposing a plurality of belt pieces, in which the reinforcing cords 53A coated with a rubber material is embedded, in parallel along the tire circumferential direction. Similarly, the second crossing belt layer 52B may be configured by arranging a belt-like member, in which the reinforcing cord 53B coated with a rubber material is embedded, so as to make a round in the tire circumferential direction, or may be configured by disposing a plurality of belt pieces, in which the reinforcing cords 53B coated with a rubber material is embedded, in parallel along the tire circumferential direction.

A thickness of the entire crossing belt layer 52 having the superposed structure is preferably from 1.6 mm to 5.0 mm. When the thickness of the crossing belt layer 52 is in the above range, there is also an effect of weight reduction by optimizing a rubber volume, and fuel consumption performance can be improved. A ratio (x/y) of a thickness (x) of the first crossing belt layer 52A and a thickness (y) of the second crossing belt layer 52B is preferably from 1: 1 to 1: 2, from the viewpoint of securing a strength of a plunger.

### (Reinforcing Member)

In the second embodiment, a pair of reinforcing members 54 is provided on an outer peripheral surface of the tire frame member 12. The reinforcing member 54 is provided with the plurality of reinforcing cords coated with a rubber. The reinforcing member 54 extends from the outer peripheral surface of one bead portion 20 of the tire frame member 12 toward an outer surface of the side portion 22. An end portion of the outer side of the reinforcing member 54 in the tire radial direction is located around an end portion of the outer side of the crown portion 24 in the tire width direction and is covered with the end portion of the outer side of the tread rubber 30 in the tire width direction. Fig. 2 shows an embodiment in which the end portion of the outer side of the reinforcing member 54 in the tire radial direction does not overlap with the crossing belt layer 52, but the present invention is not limited thereto and may have an embodiment in which that the end portion of the outer side of the reinforcing member 54 in the tire radial direction and the end portion of the ouster side of the crossing belt layer 52 in the tire width direction overlap with each other.

The reinforcing cords used for the reinforcing member 54 are a monofilament (also referred to as a single filament) of an organic fiber or a multifilament (also referred to as a stranded filament) in which an organic fiber is stranded, and each of the reinforcing cords extend in the radial direction and are parallel with the tire circumferential direction. An angle of the reinforcing cord may be inclined at an angle of 10° or less with respect to the radial direction.

As the organic fiber, a material such as nylon, PET, glass, or aramid can be used. As the material of the reinforcing cord, a metal such as steel may be used. Further, the reinforcing member 54 may be one in which the reinforcing cord is coated with a resin instead of a rubber.

A pair of cover rubber layers 56 extending from the bead portion 20 of the tire frame member 12 to the outer side of the crown portion 24 in the tire width direction is provided on the outer surface of the reinforcing member 54. As the cover rubber layer 56, the same kind of rubber as that used for a sidewall of a conventional rubber pneumatic tire can be used. Each end portion of the inner side of the cover rubber layer 56 in the tire radial direction extends to the inner peripheral surface of the bead portion 20 of the tire frame member 12, and both ends of the reinforcing member 54 are covered with the cover rubber layer 56.

In order to manufacture the tire 50 according to the second embodiment, for example, first, the tire piece 12A is obtained by integrally molding a portion which is the specific resin material region 12Z of the tire piece 12A and a portion which is a region (that is, other regions) other than the specific resin material region 12Z. Thereafter, the pair of tire pieces 12A is bonded to each other in the tire width direction, thereby forming the annular tire frame member 12.

In addition, after the portion which is the specific resin material region 12Z of the tire piece 12A and the portion which is the region (that is, other regions) other than the specific resin material region 12Z are each separately molded, the portions may be bonded to each other to obtain the tire piece 12A. Thereafter, the pair of tire pieces 12A is bonded to each other in the tire width direction, thereby forming the annular tire frame member 12.

It is to be noted that the portion which is the specific resin material region 12Z of the tire piece 12A and the portion which is the region (that is, other regions) other than the specific resin material region 12Z may be bonded to each other by interposing, for example, a resinous bonding member therebetween. As the bonding member, a thermoplastic material or a molten resin of the same kind as or different kind from the tire piece 12A can be used.

Next, an adhesive is applied onto the outer peripheral surface 24A of the tire frame member 12 to form a coating film, and the unvulcanized second crossing belt layer 52B is disposed on the coating film. In addition, the unvulcanized first crossing belt layer 52A is disposed on the unvulcanized second crossing belt layer 52B. Next, the unvulcanized tread rubber 30 is disposed on the unvulcanized first crossing belt layer 52A, and the unvulcanized reinforcing member 54 and the unvulcanized cover rubber layer 56 are also disposed on the side portion 22. Subsequently, by performing a vulcanization treatment by heating, it is possible to obtain the tire 50 according to the second embodiment: in which the crossing belt layer 52 which has the superposed structure and includes the reinforcing cord 53 coated with the rubber material, and the tread rubber 30 are disposed on the tire frame member 12 in this order; and in which the reinforcing member 54 is formed on the side portion. The method of manufacturing the tire 50 according to the second embodiment is not limited to this method.

### (Action)

The action of the tire 50 according to the second embodiment will be described. In the tire 50 according to the second embodiment, since the tire frame member 12 has the specific resin material region 12Z formed of the resin material having the Young's modulus in a specific range, and the region being included in the reinforcing region 52Z, the rigidity of the reinforcing region 52Z can be increased and the cornering force can be improved.

In the tire 50 according to the second embodiment, the crossing belt layer 52 has a superposed structure (two layers in the second embodiment), and the first reinforcing cord 53A and the second reinforcing cord 53B each included in the first crossing belt layer 52A and the second crossing belt layer 52B overlapping with each other are arranged so as to be inclined with respect to the tire rotation axis. Thereby it is possible to obtain a pantograph effect. Therefore, in the tire 50, the shearing force in the tire circumferential direction generated, during traveling, between the tread rubber 30 and the crown portion 24 due to the difference in diameter between the tread rubber 30 and the crown portion 24 is absorbed by the crossing belt layer 52. Therefore, it is possible to reduce a peeling force in the tire circumferential direction generated between the crown portion 24 and the crossing belt layer 52, and a peeling force in the tire circumferential direction generated between the crossing belt layer 52 and the tread rubber 30.

In the tire 50 according to the second embodiment, since the outer surface of the tire frame member 12 is covered with the reinforcing member 54, even when the tire frame member 12 becomes thinned, it is possible to suppress the decrease in pressure resistance performance and cut resistance performance.

Specifically, it is possible to improve the cut resistance performance by reinforcing the tire frame member 12 with the reinforcing member 54. In addition, it is possible to retain an internal pressure by imposing a part of the tension generated in the tire frame member 12 on the reinforcing member 54, by which the pressure resistance performance is improved.

In addition, since the reinforcing member 54 is formed by coating the reinforcing cord with rubber, the reinforcing member 54 can be easily processed. In addition, since the adhesion between: the reinforcing member 54; and the cover rubber layer 56 and the tread rubber 30 is high, the durability of the tire can be improved. Further, the cover rubber layer 56 can suppress the deterioration in the reinforcing member 54 due to ultraviolet light.

### <Other Embodiments>

Although an example of the embodiment of the present invention has been described, the present invention is not limited to these embodiments, and various other embodiments are possible within the scope of the present invention.

For example, in the second embodiment, the reinforcing member 54 is arranged so as to extend over one round in the tire circumferential direction, but the reinforcing member may be formed by arranging the plurality of reinforcing member pieces, which extend in the radial direction, in parallel in the tire circumferential direction. In this case, if the shape of the reinforcing member pieces each tapers toward the end portion located on the inner side in the tire radial direction, there is no possibility that the reinforcing member pieces overlap with each other on the side of the bead portion 20 having a small diameter.

In addition, the first embodiment and the second embodiment can be appropriately combined. For example, the reinforcing member 54 of the second embodiment may be provided on the outer surface of the tire frame member 12 of the first embodiment. In addition, in an aspect of the first embodiment and the second embodiment, the crossing belt layer is formed by combining the belt pieces, but the present invention is not limited thereto. For example, a long belt-like crossing belt layer may be formed and the belt-like crossing belt layer may be configured so as to be disposed over one round in the tire circumferential direction.

### [Examples]

Hereinafter, the present invention will be more specifically described by way of Examples. However, the present invention is not limited to the following Examples.

### [Example 1]

As Example 1, a tire 10 shown in Fig. 1 was manufactured.

### • Construction of Tire Frame Member

A polyamide-based elastomer (TPA) was used for each of a resin material constituting a specific resin material region 12Z in a tire frame member 12 and a resin material constituting other regions (specifically, a side portion 22 and a bead portion 20 of the tire frame member 12). A resin material (polyamide-based elastomer) having different Young's modulus was used for the specific resin material region 12Z and other regions, respectively, and the Young's modulus was adjusted by selecting the resin material. The Young's modulus, a length in a tire width direction, a thickness, or the like measured for each region are shown in the following Table 1

### • Reinforcing Layer

A vulcanizing agent, a vulcanization promoter, and the like were added to 100% of unvulcanized natural rubber (NR) and kneaded to prepare a rubber material, and a reinforcing cord 17 made of a steel cord was coated with the unvulcanized rubber material. The coated reinforcing cord 17 is spirally wound, via a hot melt adhesive, around an outer periphery of the crown portion 24 of the tire frame member 12 along a tire circumferential direction, and then the unvulcanized rubber material is vulcanized, thereby forming an adhesive layer 18 and a spiral belt layer (corresponding to the reinforcing layer) 16.

### • Tread Rubber

A tread rubber 30 is formed so as to cover the spiral belt layer (corresponding to the reinforcing layer) 16 on the outer periphery of the crown portion 24 of the tire frame member 12, and is vulcanization adhered.

### [Example 2]

A tire was manufactured in the same manner as Example 1, except that an average thickness of the reinforcing region in the tire frame member 12 was changed to that shown in the following Table 1.

### [Example 3]

A tire was manufactured in the same manner as Example 1, except that an average thickness of the reinforcing region in the tire frame member 12 was changed to that shown in the following Table 1.

### [Comparative Example 1]

A tire was manufactured in the same manner as Example 1, except that the same polyamide-based elastomer (specifically, a resin material used in other regions in Example 1) was used for the specific resin material region 12Z and other regions (specifically, a side portion 22 and a bead portion 20) in the tire frame member 12, that is, the whole tire frame body 12 was formed of the same resin material.

### <Evaluation>

### (Cornering Property)

Evaluation on cornering property was performed by the following method.

A cornering force test (cornering force at a slip angle of 1°) was carried out by a flat belt tester using the tires (tire size 195/65 R14, internal pressure of 210 kPa) of Examples and Comparative Example. The evaluation results are shown in the following Table 1.

The flat belt tester used in the test is an apparatus which forms a belt-like thin plate of a steel in a ring form like a conveyor belt, applies a tension to two cylinders to rotate the tire, presses the tire on a flat part formed on an upper part thereof, a device to measure force, and measures a six component force of the tire while rolling the tire. By using this flat belt tester, the tire was pressed at a camber angle of 45° and a load of 1.5 kN and rolled at a speed of 50 km/h.

For the evaluation results, the value of the cornering force performed by the flat belt tester is indicated by an index display with Comparative Example as 100. The larger the numerical value, the larger the cornering force is, which means that the traveling stability is excellent.

**[Table 1]**

| | Reinforcing Layer | Tire Frame Member | | | | | Ratio | | Evaluation |
|---|---|---|---|---|---|---|---|---|---|
| | | Specific resin material region | | Reinforcing region | Other regions | | | | |
| | Length of tire width direction (mm) [a] | Young's modulus (MPa) | Length of tire width direction (mm) [b] | Average thickness (mm) [c] | Young's modulus (MPa) | Thickness of minimum thickness portion of side portion (mm) [d] | [b]/[a] | [c]/[d] | Cornering property (index) |
| Example 1 | 180 | 250 | 190 | 1.5 | 10 | 1.5 | 1.05 | 1 | 104 |
| Example 2 | 180 | 250 | 190 | 3 | 10 | 1.5 | 1.05 | 2 | 130 |
| Example 3 | 180 | 250 | 190 | 6 | 10 | 1.5 | 1.05 | 4 | 137 |
| Comparative Example 1 | 180 | 10(*) | -(*) | 1.5 | 10(*) | 1.5 | - | 1 | 100 |
| (*) In Comparative Example 1, the whole tire frame member was formed of the same resin material | | | | | | | | | |

The disclosure of Japanese Patent Application No. 2016-179833 filed on September 14, 2016 is incorporated herein by reference in its entirety.

All documents, patent applications, and technical standards mentioned in the present specification are incorporated herein by reference to the same extent as if each individual document, patent application, and technical standard was specifically and individually indicated to be incorporated herein by reference.

## Claims

1. A tire, comprising:
a tire frame member formed of a resin material; and
a reinforcing layer that includes a plurality of reinforcing cords coated with a rubber material and that is disposed on an outer side of the tire frame member in a tire radial direction;
wherein the tire frame member has a region formed of a resin material having a Young's modulus in a range of from 50 MPa to 2,000 MPa, and the region being included in at least a part of a reinforcing region in which the reinforcing layer is disposed on an outer side in the tire radial direction.

2. The tire according to claim 1, wherein a length of the region formed of a resin material having a Young's modulus in a range of from 50 MPa to 2,000 MPa in a tire width direction is in a range of from 0.8 to 1.3 times a length of the reinforcing region in the tire width direction.

3. The tire according to claim 1 or 2, wherein:
the tire frame member has a pair of bead portions, a pair of side portions extending from the pair of bead portions toward the outer side in the tire radial direction, and a crown portion extending from the side portions toward an inner side in the tire width direction, and
an average thickness of the reinforcing region ranges from 1 to 10 times a thickness of a minimum thickness portion of the side portions.

4. The tire according to any one of claims 1 to 3, wherein a length of the region in the tire width direction ranges from 0.5 to 1.0 times a length of the tire in the tire width direction.

5. The tire according to any one of claims 1 to 4, wherein the Young's modulus of the resin material constituting a region other than the region ranges from 1 MPa to 30 MPa.

6. The tire according to any one of claims 1 to 5, wherein the tire frame member and the reinforcing layer are fixed by an adhesive layer.

7. The tire according to claim 6, wherein the adhesive layer includes at least one selected from the group consisting of a water dispersion adhesive, a solvent-free adhesive, a solution adhesive and a solid adhesive.

8. The tire according to any one of claims 1 to 7, wherein the reinforcing layer is a crossing belt layer that is inclined with respect to a tire rotation axis of the tire frame member and includes a plurality of reinforcing cords coated with a rubber material.

9. The tire according to claim 8, wherein the crossing belt layer is a laminated structure having a plurality of layers, and is arranged so that reinforcing cords included in one layer of the plurality of layers and reinforcing cords included in other layers cross each other between these layers.
